Europäisches Patentamt

European Patent Office

Office européen des brevets

(11) Numéro de publication: **0 194 930 B1**

# FASCICULE DE BREVET EUROPEEN

(45) Date de publication de fascicule du brevet:
12.06.91

(51) Int. Cl.⁵: **G01L 5/22, B62D 5/00**

(21) Numéro de dépôt: **86400461.9**

(22) Date de dépôt: **05.03.86**

(54) **Dispositif capteur de couple électro-optique pour mécanisme d'actionnement.**

(30) Priorité: **14.03.85 ES 541703**

(43) Date de publication de la demande:
**17.09.86 Bulletin 86/38**

(45) Mention de la délivrance du brevet:
**12.06.91 Bulletin 91/24**

(84) Etats contractants désignés:
**DE FR GB IT**

(56) Documents cités:
**EP-A- 0 077 710
FR-A- 2 502 570
US-A- 3 111 028**

**IEEE TRANSACTIONS ON INDUSTRIAL ELEC-
TRONICS AND CONTROL INSTRUMENTA-
TION, vol. IECI-17, no. 2, avril 1970, pages
71-77, IEEE, New York, US; C.E. JOHNSON, Jr.
et al.: "New optical torque transducer and
dynamometer"**

(73) Titulaire: **BENDIX ESPANA S.A.
Balmes 243
Barcelona 6(ES)**

(72) Inventeur: **Simon Bacardit, Juan
Calle Mallorca 451 6o 4aA
Barcelona 13(ES)**

(74) Mandataire: **Lejet, Christian et al
BENDIX FRANCE Division Technique Service
Brevets Bendix Europe 126 rue de Stalingrad
F-93700 Drancy(FR)**

**Description**

La présente invention concerne les dispositifs capteurs de couple pour mécanisme d'actionnement comprenant, dans un boîtier, un organe rotatif primaire, relié à un organe de commande, un organe rotatif secondaire, coaxial à l'organe primaire et relié à un organe de sortie, un organe élastique de torsion coopérant avec les organes primaire et secondaire et permettant une rotation relative entre ceux-ci suivant une plage angulaire déterminée de part et d'autre d'une position relative neutre, le dispositif capteur comprenant une première et une seconde structures tournantes constituées de deux disques parallèles axialement adjacents disposés dans une chambre annulaire du boîtier, et solidarisées respectivement en rotation à l'organe primaire et à l'organe secondaire et comportant des zones s'étendant au voisinage immédiat l'une de l'autre, chaque zone de chaque structure tournante comportant une série de fenêtres optiques angulairement réparties et agencées de façon que chaque fenêtre soit susceptible de s'inscrire dans un trajet lumineux entre une source lumineuse et au moins un détecteur photo-électrique du type proportionnel, les fenêtres de chaque série étant agencées de façon que, dans ladite position relative neutre, deux fenêtres correspondantes appartenant à chaque série soient en recouvrement partiel dans ledit trajet lumineux.

Un dispositif capteur de couple de ce type est décrit dans le document EP-A-0 124 790, les moyens détecteurs de couple comprenant des jauges extensométriques montées sur l'organe élastique de torsion constituée sous la forme d'une barre de torsion présentant une section centrale en forme de lame. De tels dispositifs sont confrontés aux problèmes bien connus de mise en place et de solidarisation des jauges extensométriques sur leur support et posent d'autre part des problèmes au niveau des connections électriques de ces jauges de contrainte. De plus, ces dispositifs nécessitent des circuits d'exploitation électriques relativement sophistiqués pour garantir un minimum de fiabilité en fonctionnement.

On connaît également, des documents IEEE TRANSACTIONS ON INDUSTRIAL ELECTRONICS AND CONTROL INSTRUMENTATION, vol. IECI-17, no. 2, avril 1970, pages 71-77, IEEE, New York, US; C.E. JOHNSON, Jr. et al.: "New optical torque transducer and dynamometer", et US-A-3,111,028, des capteurs de couple comprenant deux disques segmentés ou crantés montés à chaque extrémité d'une barre de couple de sorte que la torsion de cette barre fasse tourner un des disques par rapport à l'autre, ce mouvement relatif faisant accroître ou décroître la surface d'une fenêtre, qui laisse ainsi passer plus ou moins de lumière entre des sources lumineuses et des détecteurs photo-électriques qui délivrent un courant mesurable par un galvanomètre à cadre mobile.

Dans le document FR-A-2 502 570, un capteur de couple fonctionnant selon ce principe est utilisé dans un mécanisme de direction assistée d'un véhicule automobile.

Dans ces trois derniers documents, le chemin optique entre la source lumineuse et le détecteur photo-électrique est rectiligne et parallèle à l'axe de la barre de torsion entre les organes primaire et secondaire. Il en résulte des courants de sortie très faibles, mesurables seulement par un galvanomètre, un montage différentiel ou amplificateur.

La présente invention a pour objet de proposer un dispositif capteur de couple de conception simple, robuste et fiable, au fonctionnement précis et offrant une grande souplesse d'utilisation et d'adaptation alliées à une plus grande sensibilité du dispositif.

Pour ce faire, selon une caractéristique de l'invention, les axes de la source lumineuse et du détecteur photo-électrique sont inclinés par rapport à l'axe des organes primaire et secondaire. De la sorte, les différents trajets lumineux au travers des différentes sections de passage des fenêtres résultant des multi-réflections permettent d'obtenir, pour une puissance de source lumineuse déterminée, des flux lumineux plus importants reçus par le détecteur photo-électrique et, partant, une plus grande sensibilité du dispositif.

On connaît, certes, notamment dans le domaine considéré, des dispositifs de mesure opto-électriques, notamment du document EP-A-0 115 381. Ces dispositifs connus permettent de mesurer la position angulaire et la vitesse angulaire d'un organe tournant, et constituent simplement une transposition des systèmes électromagnétiques à roue phonique antérieurs assurant les mêmes fonctions. De ce fait, ces dispositifs connus mettent en jeu un seul disque cranté ou masqué solidarisé à l'organe de commande du mécanisme d'actionnement et imposent des circuits électriques discriminateurs pour détecter en outre le sens de rotation de cet organe de commande.

Dans l'agencement selon l'invention, les deux structures tournantes, typiquement réalisées sous la forme de disques opaques ou rendus partiellement opaques, capables d'une rotation relative telle qu'autorisée entre les organes primaire et secondaire par l'organe élastique de torsion, comportent, dans la position relative neutre de ces organes primaire et secondaire des fenêtres en recouvrement partiel dans le trajet lumineux fournissant ainsi, au détecteur photo-électrique, un flux lumineux étalon indépendamment de la configuration exacte et du positionnement exact de ces deux fenêtres. Lorsque l'organe primaire est actionné dans un sens ou dans l'autre, ce flux lumineux étalon est modifié en étant soit réduit, soit augmenté, fournissant ainsi simultanément une indication sur la direction d'actionnement de l'organe de commande et sur la valeur du couple exercée sur ce dernier. De plus, le défilement des fenêtres devant le trajet lumineux permet en outre, de façon classique, de déterminer la position et la vitesse angulaires de cet organe de commande.

D'autres caractéristiques et avantages de la présente invention ressortiront de la description suivante de modes de réalisation, donnés à titre illustratif mais nullement limitatif, faite en relation avec les dessins annexés, sur lesquels :

La Figure 1 est une coupe longitudinale d'un mécanisme d'actionnement incorporant un premier mode de réalisation d'un dispositif capteur de couple

La Figure 2 est une vue schématique en coupe transversale partielle suivant la ligne II-II de la Figure 1;

La Figure 3 est une vue en coupe schématique transversale partielle suivant la ligne de coupe III-III de la Figure 1;

La Figure 4 est un diagramme explicatif du signal de sortie du dispositif de la Figure 1;

La Figure 5 est une vue en coupe longitudinale analogue à celle de la Figure 1, montrant un mode de réalisation de l'invention;

La Figure 6 est une vue analogue à la Figure 1, montrant un SECOND mode de réalisation de l'invention;

La Figure 7 est une vue schématique en coupe transversale suivant le plan de coupe VII-VII de la Figure 6;

La Figure 8 est une vue analogue à la Figure 6, montrant un TROISIEME mode de réalisation de l'invention; et

La Figure 9 est une vue en coupe longitudinale d'un QUATRIEME mode de réalisation d'un dispositif capteur de couple selon l'invention.

Dans la description qui va suivre et sur les dessins, les éléments identiques ou analogues portent les mêmes chiffres de référence, éventuellement indicés ou augmentés d'un digit numérique supplémentaire.

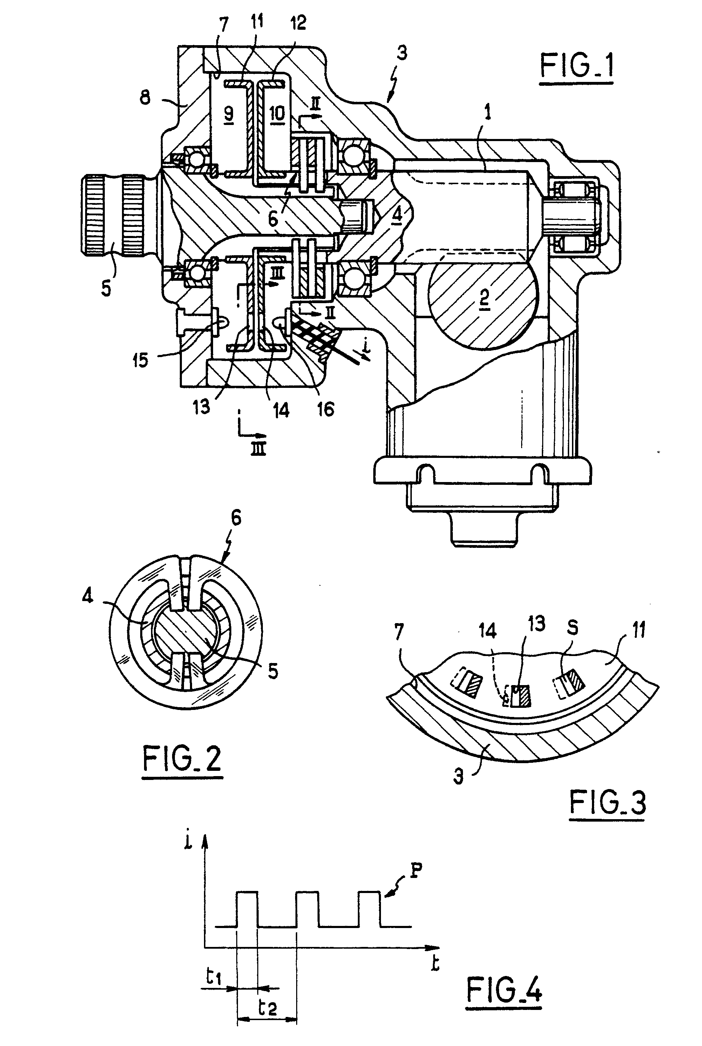

On a représenté sur les figures 1 à 4 les principes utilisés dans un dispositif capteur de couple, appliqué à un ensemble coopérant d'un pignon (1) et d'une crémaillère (2) dans un boîtier de direction (3). De façon classique, le pignon (1), engrenant avec la crémaillère (2) reliée à un mécanisme d'orientation de roues d'un véhicule (non représenté), est taillé dans un organe de sortie tubulaire (4) monté à rotation dans le boîtier (3) et actionné en rotation, par l'intermédiaire d'une liaison élastique à course morte, par un organe primaire (5), coaxial à l'organe secondaire (4) et monté à rotation dans le boîtier (3) dans le prolongement axial de l'organe secondaire (4), l'organe primaire (5) étant destiné à être relié à un volant de direction de véhicule (non représenté). Dans le mode de réalisation de la Figure 1, l'accouplement élastique à course morte entre les organes primaire (5) et secondaire (4) est consitué d'un jeu de ressorts en C (6) tel que décrit par exemple dans la demande de brevet européen EP-A-0077710 au nom de la demanderesse. Comme on le voit bien sur la Figure 2, les ressorts en C (6) comportent des pattes s'étendant radialement vers l'intérieur au travers de fentes longitudinales ménagées dans l'organe secondaire (4) et reçues dans des rainures longitudinales adjacentes de l'organe primaire (5).

Dans le boîtier (3) est ménagée une chambre circulaire (7), fermée par un couvercle (8) dans lequel tourillonne l'organe primaire (5) . Dans la chambre (7) sont disposés un premier disque (11), solidarise à la périphérie de l'organe primaire (5), et un second disque (12), solidarisé à la périphérie de l'extrémité adjacente de l'organe secondaire (4). Dans le mode de réalisation représenté, chaque disque présente, en coupe transversale, une section en forme de C, le diamètre externe des disques étant légèrement inférieur au diamètre interne de la chambre (7) de façon à définir dans cette dernière deux demi-chambres (9 et 10) nettement séparées axialement l'une de l'autre. Les disques (11 et 12), réalisés en métal ou en matériau plastique rigide, sont agencés de façon que leurs parties de voiles radiales planes s'étendent au voisinage immédiat axialement l'une de l'autre. Dans la partie de voile pleine et opaque de chaque disque (11 et 12) est ménagée, par découpe, une série de fenêtres (13, 14 respectivement), réparties angulairement sur des anneaux concentriques , comme on le voit bien sur la Figure 3. Le nombre des fenêtres (13 et 14) est de préférence identique et elles ont toutes sensiblement les mêmes dimensions. Lorsque les organes primaire (5) et secondaire (4) sont dans leur position relative neutre telle que définie par l'organe élastique de torsion (6) constituant l'accouplement élastique à course morte entre ces deux organes, les disques 11 et 12 sont calés angulairement sur leurs organes respectifs de façon que chaque fenêtre (13) soit en recouvrement partiel avec une fenêtre correspondante (14) en définissant ainsi une ouverture de passage S calibrée pour un trajet lumineux entre les deux demi-chambres (9 et 10).

Dans le mode de réalisation de la Figure 1, une source lumineuse (15) et un détecteur photo-électrique (16) sont disposés sur les parois axiales en regard de la chambre (7) coaxialement aux anneaux des fenêtres (13 et 14). La source lumineuse (15) est typiquement une diode électro-luminescente (LED), montée directement dans le boîtier (3) ou la terminaison d'un conducteur optique s'étendant dans la demi-chambre (9 ou 10) correspondante, le détecteur photo-électrique (16) étant du type proportionnel et constitué, par exemple, par un photo-transistor monté directement dans le boîtier (3) ou par la terminaison d'un conduit optique débouchant dans la demi-chambre (10 ou 9) correspondante. Avec un tel agencement, lorsque les organes primaire (5) et secondaire (4) sont dans leur position relative neutre, la section de passage S permet au détecteur photo-électrique (16) de recevoir un flux lumineux étalon. Par contre, lorsque l'organe primaire est actionné dans un sens ou dans l'autre sous l'effet de l'application d'un couple sur cet organe primaire, le disque (11) tourne, dans un premier temps, par rapport au disque (12) à l'intérieur de la plage angulaire, ce qui se traduit par une augmentation ou une réduction, selon le sens de rotation, de la section de passage S, se traduisant à son tour par une augmentation ou une diminution correspondante du flux lumineux frappant le détecteur photo-électrique (16), fournissant ainsi une indication, d'une part sur la direction d'actionnement de l'organe primaire (5), et d'autre part sur la valeur du couple exercé sur ce dernier à l'encontre de l'organe élastique (6). Si, par contre, le couple exercé sur l'organe primaire (5) amène ce dernier à entraîner directement en rotation l'organe secondaire (4), le défilement des fenêtres (13 et 14) dans le trajet lumineux entre la source lumineuse (15) et le détecteur photo-électrique (16) permet, par comptage, de determiner, de façon classique, la position et la vitesse angulaire de l'organe primaire. Sur la Figure 4 on a représenté, en p, le signal généré par le détecteur photo-électrique (16) en fonction de l'actionnement relatif des organes primaire (5) et secondaire (4), $t1$ étant la durée de l'impulsion lumineuse correspondant au défilement d'un passage S et $t_2$ la durée entre deux telles impulsions lumineuses correspondant au défilement, dans le trajet lumineux, de deux passages S successifs. Si $t_1$ est inférieur ou supérieur à $t_2/2$, on peut ainsi déterminer le sens de rotation de l'organe primaire (5), sa vitesse de rotation étant fonction de la durée $t_2$. Le couple d'actionnement en rotation de l'organe primaire (5) peut être par ailleurs déterminé en fonction du rapport $t_1/t_2$.

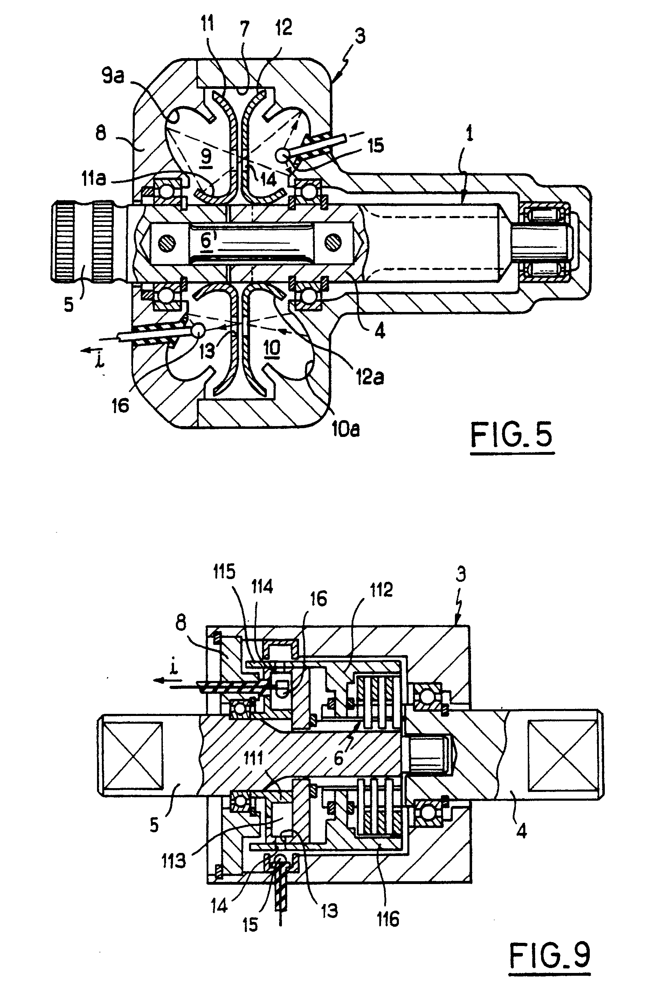

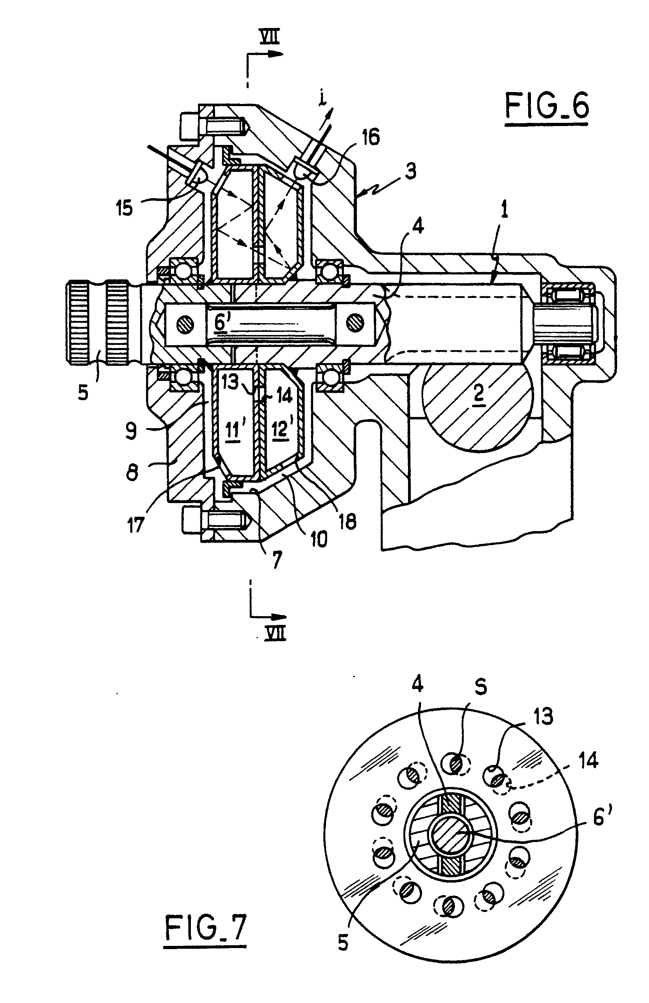

Dans le mode de réalisation selon l'invention représenté sur les figures 5 et 6, l'organe élastique d'accouplement à course morte entre les organes primaire (5) et secondaire (4) est constitué ici d'une barre de torsion (6'), des saillies axiales de l'un de ces organes étant reçues dans des rainures axiales de largeur supérieure de l'autre de ces organes, comme on le voit également sur la Figure 7. Dans le mode de réalisation de la Figure 5, les parois axialement opposées des demi-chambres (9 et 10) présentent chacune une forme toroïdale à section transversale sensiblement parabolique ($9_a$ et $10_a$); les disques opaques (11 et 12) comportent, comme précédemment, dans leurs parties de voiles axialement adjacents, des fenêtres coincidentes (13 et 14), et présentent chacun une embase (11$_a$, 12$_a$ respectivement), de forme toroïdale à section transversale également sensiblement parabolique, en opposition aux paraboles ($9_a$ et $10_a$) des demi-chambres (9 et 10) et présentent avantageusement chacun une surface axiale externe (c'est-à-dire en vis-à-vis de la paroi correspondante de la demi-chambre associée) réfléchissante, obtenue, par exemple, par traitement de surface. Comme dans le mode de réalisation de la Figure 1, la source lumineuse (15) et le récepteur photo-electrique (16) sont disposés chacun dans une demi-chambre (9 ou 10) mais en étant ici placés respectivement sensiblement en un foyer de la demi-chambre correspondante. Avec cet agencement, comme on le voit sur la Figure 5, la source (15) et le détecteur (16) ne sont plus nécessairement alignés avec les ouvertures (13, 14) mais sont avantageusement disposés de part et d'autre, radialement, des organes primaire (5) et secondaire (4). Les différents trajets lumineux au travers des différentes sections de passage S des fenêtres (13 et 14) résultant des multi-réflexions dans les demi-chambres (9 et 10) permettent d'obtenir, pour une puissance de source lumineuse déterminée, des flux lumineux plus importants reçus par le détecteur photo-électrique et, partant, une plus grande sensibilité du dispositif.

Dans le mode de réalisation de la Figure 6, les disques opaques précédents sont ici substitués par des disques épais (11' et 12') réalisés en matériau translucide, avantageusement transparent, par exemple en polymétacrylate de méthyle ou analogue. Les surfaces externes des disques sont revêtues d'une couche d'un revêtement opaque intérieurement réfléchissant, par exemple un dépôt métallique recouvert d'un enduit opaque. Comme dans les modes de réalisation précédents, les faces axiales internes planes (c'est-à-dire adjacentes) des deux disques s'étendent au voisinage immédiat, axialement, l'une de l'autre et c'est dans les revêtements de ces faces internes que sont formées les fenêtres (13 et 14) du type décrit ci-avant. Par contre, dans les faces axiales externes (en regard des parois correspondantes des demi-chambres associées 9 et 10 sont formées, dans le revêtement des disques, des zones annulaires transparentes (17 et 18), respectivement en regard desquelles sont disposés, dans la demi-chambre associée (9 ou 10), la source lumineuse (15) et le détecteur photo-électrique (16), dont les axes sont inclinés par rapport à l'axe des organes 5 et 4. De cette façon, comme illustré sur la Figure 6, le rayon lumineux provenant de la source lumineuse pénètre, en biais, via la zone annulaire non revêtue (17, 18) du disque associé, à l'intérieur du disque translucide où il est réfléchi plusieurs fois par le revêtement opaque intérieurement réfléchissant jusqu'à ce qu'il passe au travers des lumières coincidentes (13 et 14) pour parvenir, après d'autres réflections dans l'autre disque, jusqu'à la zone annulaire non revêtue de cet autre disque et, ainsi, jusqu'au détecteur photo-électrique. Dans le mode de réalisation représenté sur la Figure 6, les zones annulaires non revêtues (17, 18) des disques (11', 12') sont formées sur une couronne périphérique de chaque disque inclinée par rapport au plan du disque, la source lumineuse (15) et le détecteur photo-électrique (16) étant montés dans le boîtier (3) et son couvercle (8) suivant des axes perpendiculaires à ces couronnes inclinées.

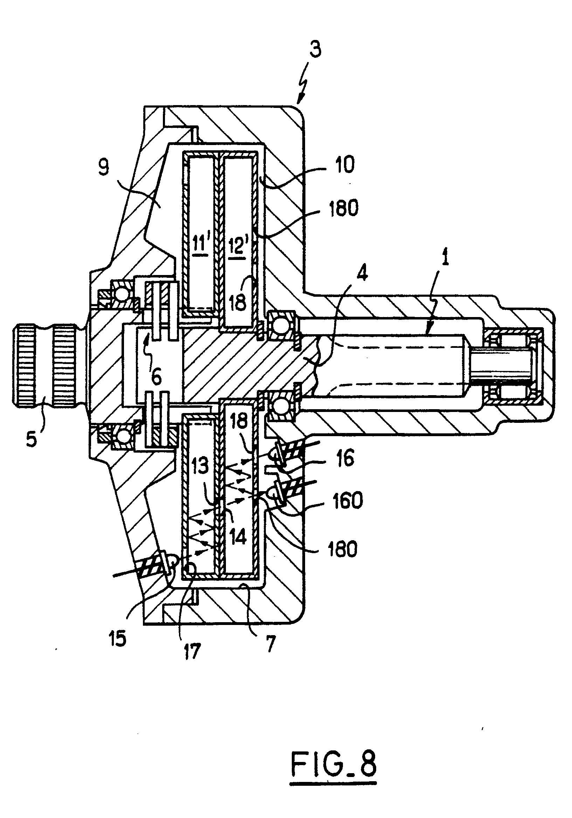

Le mode de réalisation de la Figure 8 est similaire à bien des égards à celui qui vient d'être décrit en relation avec la Figure 6. Dans le mode de réalisation de la Figure 8, les disques translucides (11' et 12') ont chacun une section rectangulaire, la zone annulaire non revêtue (17) dans la face axiale externe du disque adjacent à la source lumineuse (15) étant formée à la périphérie de cette face axiale externe s'étendant radialement, l'autre zone annulaire non revêtue (18) adjacente au détecteur photo-électrique (16) étant ménagée, dans la face axiale externe de l'autre disque, sur la portion de sortie du trajet lumineux réfléchi dans cet autre disque (12') après avoir traversé les fenêtres (13 et 14), les axes de la source (15) et du détecteur (16) étant inclinés par rapport à l'axe des organes 5 et 4. Dans ce mode de réalisation de la Figure 8, la face axiale externe de l'autre disque (12') comporte en outre une seconde zone annulaire non revêtue (180) alignée avec la portion du trajet lumineux provenant directement des fenêtres (13 et 14), un second détecteur photo-électrique à axe incliné (160) étant disposé au voisinage de cette seconde zone annulaire (180). Comme précédemment, le premier détecteur (16) est utilisé pour mesurer le couple appliqué à l'organe primaire (5) tandis que le second détecteur photo-électrique (160), recevant la lumière provenant directement des fentes (13 et 14) à travers le second disque (12'), est utilisé pour détecter la vitesse de rotation de l'équipage organe primaire (5) - organe secondaire (4), au moyen d'un circuit d'exploitation propre. On notera que, dans ce mode de réalisation de la Figure 8, le dispositif élastique d'accouplement en rotation à course morte (6), et sous la forme d'une série de ressorts en C, est disposé du côté de l'organe primaire (5) par rapport aux disques (11' et 12') par opposition à l'agencement décrit en relation avec la Figure 1 où l'organe élastique (6) était disposé, vis-à-vis des disques (11 er 12), du côté de l'organe secondaire (4).

Dans les modes de réalisation qui viennent d'être décrits, le dispositif opto-électrique détecteur de couple est disposé au niveau du boîtier de direction renfermant l'ensemble pignon (1)-/crémaillère (2). Ce dispositif peut toutefois être disposé en tout point de la chaîne cinématique entre un volant de direction et un organe de sortie, par exemple en une zone intermédiaire d'une colonne de direction. Un tel mode de réalisation est représenté sur la Figure 9 où l'organe secondaire (4) est destiné à être relié à un tronçon aval d'une telle colonne de direction. Pour conserver, dans ce cas, un encombrement hors tout du dispositif relativement restreint, la structure tournante, solidaire en rotation de l'organe primaire (5), est ici constituée d'un élément annulaire (111) définissant une chambre intérieure torique (113) délimitée périphériquement par une paroi tubulaire (114). L'autre structure tournante, solidarisée à l'organe secondaire (4), est constituée sous la forme d'une pièce tubulaire (112) comportant une paroi tubulaire axiale (115) entourant concentriquement la paroi (114) de la première structure tournante (111), les fenêtres coopérantes (13 et 14) étant formées, radialement alignées, dans ces parois coaxiales (114 et 115). Comme représenté sur la Figure 9, la source de lumière (15) est avantageusement disposée dans une auge annulaire radialement en regard, vers l'extérieur, des fenêtres (13 et 14), le détecteur photo-électrique (16) étant disposé à l'intérieur de la chambre torique (113). Dans le mode de réalisation représenté, la seconde structure tournante (112) comporte avantageusement un second prolongement tubulaire axial (116) opposé à la paroi (115) et entourant le jeu de ressorts en C de l'organe élastique d'accouplement à course morte (6).

Bien que les dispositifs qui ont été décrits soient destinés à la commande de servo-directions à moteur électrique d'assistance ou à assistance hydraulique avec pilotage d'électro-valves de commande, ils ne s'en trouvent pas limités mais sont susceptibles d'autres utilisations, par exemple pour la commande de gouvernes électriques d'aéronefs ou dans les machines outils.

## Revendications

1. Dispositif capteur de couple pour mécanisme d'actionnement comprenant, dans un boîtier (3), un organe rotatif primaire (5), relié à un organe de commande, un organe rotatif secondaire (4), coaxial à l'organe primaire et relié à un organe de sortie (2), un organe élastique de torsion (6, 6') coopérant avec les organes primaire et secondaire et permettant une rotation relative entre ceux-ci suivant une plage angulaire déterminée de part et d'autre d'une position relative neutre, le dispositif capteur comprenant une première et une seconde structures tournantes (11,12 ; 11' ,12' 111,112) constituées de deux disques parallèles axialement adjacents disposés dans une chambre annulaire (7) du boîtier (3) définissant dans cette dernière deux demi-chambres (9, 10), les structures tournantes étant solidarisées respectivement en rotation à l'organe primaire (5) et à l'organe secondaire (4) et comportant des zones s'étendant au voisinage immédiat l'une de l'autre, chaque zone de chaque structure tournante comportant une série de fenêtres optiques (13,14) angulairement réparties et agencées de façon que chaque fenêtre soit susceptible de s'inscrire dans un trajet lumineux entre une source lumineuse (15) et au moins un détecteur photo-électrique (16) du type proportionnel, les fenêtres de chaque série étant agencées de façon que, dans ladite position relative neutre, deux fenêtres correspondantes appartenant à chaque série soient en recouvrement partiel dans ledit trajet lumineux, caractérisé en ce que les axes d'émission de la source lumineuse (15) et de réception du détecteur photo-électrique sont inclinés par rapport à l'axe des organes primaire (5) et secondaire (4) pour former différents trajets lumineux au travers de différentes sections de passage des fenêtres optiques (13, 14) résultant de multi-réflexions dans les demi-chambres (9, 10).

2.  Dispositif selon la revendication 1, dans lequel les disques (11,12) sont opaques et les fenêtres (13,14) sont constitués par des découpes dans ces disques, caractérisé en ce que les parois axialement opposées de la chambre (7) forment des demi-chambres (9,10), séparées par les disques (11,12) et ayant chacune une forme toroïdale à section transversale sensiblement parabolique (9$_a$,10$_a$), chaque disque ayant une embase (11$_a$,12$_a$) à section transversale également sensiblement parabolique et présentant une surface axiale externe réfléchissante, la source lumineuse (15) et le détecteur étant placés respectivement sensiblement en des foyers de ces demi-chambres.

3.  Dispositif selon la revendication 1, caractérisé en ce que les première et deuxième structures tournantes sont opaques et annulaires (111,112), lesdites zones à fenêtres (114,115) étant concentriques, et en ce que la source lumineuse (15) et le détecteur (16) sont disposés radialement de part et d'autre desdites zones concentriques (114,115).

4.  Dispositif selon la revendication 1, caractérisé en ce que chaque disque (11' ,12') est réalisé en un matériau translucide et comporte une face axiale externe et une face axiale interne revêtues d'une couche d'un revêtement opaque intérieurement réfléchissant, les faces axiales internes des deux disques étant adjacentes, les fenêtres (13,14) étant formées dans le revêtement des faces internes, les faces externes comprenant chacune une zone annulaire non revêtue (17,18) adjacente à ladite zone correspondante de la chambre (7).

5.  Dispositif selon la revendication 4, caractérisé en ce que la zone annulaire non revêtue (18) de la face externe du second disque (12') est ménagée sur une portion de sortie du trajet lumineux réfléchi dans le second disque.

6.  Dispositif selon la revendication 5, caractérisé en ce que le second disque (12') comporte, sur sa face axiale externe, une seconde zone annulaire non revêtue (180) alignée avec la portion du trajet lumineux traversant les fenêtres correspondantes (13,14) du disque, un second détecteur photo-électrique (160) étant disposé au voisinage de cette seconde zone annulaire (180).

7.  Dispositif selon l'une des revendications 5 ou 6, caractérisé en ce qu'au moins la zone annulaire non revêtue du premier disque (11') est formée sur une couronne du disque inclinée par rapport au plan du disque.

8.  Dispositif selon la revendication 4, caractérisé en ce que lesdites zones axialement opposées de la chambre (7) sont alignées avec lesdites fenêtres correspondantes (13,14) des disques dans la position relative neutre de ces derniers.

9.  Dispositif selon l'une quelconque des revendications précédentes, caractérisé en ce que l'organe élastique de torsion est une barre de torsion (6').

10. Dispositif selon l'une quelconque des revendications 1 à 8, caractérisé en ce que l'organe élastique de torsion est constitué par au moins un ressort en C (6).

**Claims**

1. Torque sensing device for an actuating mechanism comprising, in a casing (3), a primary rotary member (5), connected to a control member, a secondary rotary member (4), which is coaxial with said primary member and connected to an output member (2), an elastic torsion member (6, 6') which co-operates with said primary and secondary members and allows relative rotation between the latter through a determined angular range on each side of a relative neutral position, the sensing device comprising a first and a second rotating structure (11, 12; 11', 12' ; 111, 112) consisting of two axially adjacent parallel discs arranged in an annular chamber (7) of the casing (3), defining in this two half-chambers (9, 10), the rotating structures being made respectively integral in terms of rotation with the primary member (5) and with the secondary member (4) and having zones extending in the immediate vicinity of one another, each zone of each rotating structure having a series of optical windows (13, 14) which are angularly spaced and are arranged in such a way that each window is capable of coming within a light path between a light source (15) and at least one photo-electric detector (16) of the proportional type, said windows of each series being arranged in such a way that in said relative neutral position, two corresponding windows belonging to each series partially overlap in said light path, characterized in that the axes of emission of the light source (15) and of reception of the photo-electric detector are inclined relative to the axis of the primary member (5) and secondary member (4), so as to form various light paths through various passage cross-sections of the optical windows (13, 14) resulting from multi-reflexions in the half-chambers (9, 10).

2. Device according to Claim 1, in which the discs (11, 12) are opaque and the windows (13, 14) consist of cutouts in these discs, characterized in that the axially opposite walls of the chamber (7) form half-chambers (9, 10) separated by the discs (11, 12) and each having a toroidal form of substantially parabolic cross-section ($9_a$ , $10_a$), each disc having a base ($11_a$ , 12a) of likewise substantially parabolic cross-section and having a reflecting outer axial surface, the light source (15) and the detector being respectively located substantially at focal points of these half-chambers.

3. Device according to Claim 1, characterized in that the first and second rotating structures are opaque and annular (111, 112), the said window zones (114, 115) being concentric, and that the light source (15) and the detector (16) are arranged radially on either side of said concentric zones (114, 115).

4. Device according to Claim 1, characterized in that each disc (11', 12') is made of a translucent material and comprises an axial outer surface and an axial inner surface which are coated with a layer of an internally reflective opaque coating, said inner axial surfaces of said two discs being adjacent, said windows (13, 14) being formed in said coating of said inner surfaces, said outer surfaces each having an annular zone which is not coated (17, 18) which is adjacent to said corresponding zone of said chamber (7).

5. Device according to Claim 4, characterized in that said annular zone which is not coated (18) of said outer surface of said second disc (12') is arranged on an output portion of said light path which is reflected in said second disc.

6. Device according to Claim 5, characterized in that said second disc (12') comprises on its outer axial surface, a second annular zone which is not coated (180) in line with said portion of said light path passing through said corresponding windows (13, 14) of said disc, a second photo-electric detector (160) being situated adjacent of this second annular zone (180).

7. Device according to either of Claims 5 and 6, characterized in that at least said annular zone which is not coated of said first disc (11') is formed on a ring of said disc which is inclined relative to the plane of said disc.

8. Device according to Claim 4, characterized in that said axially opposite zones of said chamber (7) are in line with said corresponding windows (13, 14) of said discs in the relative neutral position of the latter.

9. Device according to any of the preceding claims, characterized in that said elastic torsion member is a torsion bar (6').

10. Device according to any of Claims 1 to 8, characterized in that said elastic torsion member consists of at least one C-spring (6).

**Ansprüche**

1. Drehmomentmeßvorrichtung für Betätigungs-

mechanismus, der in einem Gehäuse (3) ein primäres Drehelement (S), das mit einem Steuerelement verbunden ist, ein sekundäres Drehelement (4), das zum primären Element koaxial angeordnet und mit einem Abtriebselement (2) verbunden ist, ein elastisches Torsionselement (6, 6'), das mit dem primären und dem sekundären Element zusammenwirkt und eine relative Drehung zwischen ihnen innerhalb eines beiderseits einer neutralen relativen Position festgelegten Winkelbereichs erlaubt, umfaßt, wobei die Drehmomentmeßvorrichtung eine erste und eine zweite Drehstruktur (11, 12; 11', 12'; 111, 112) umfaßt, die von zwei parallelen Scheiben gebildet werden, die in einer ringförmigen Kammer (7) des Gehäuses (3) in axialer Richtung aneinandergrenzend angeordnet sind und in der letzteren zwei Halbkammern (9, 10) definieren, wobei sich die Drehstrukturen gemeinsam mit dem primären Element (5) bzw. mit dem sekundären Element (4) drehen und jeweils Bereiche enthalten, die sich in die unmittelbare Umgebung der jeweils anderen erstrecken, wobei jeder Bereich einer jeden Drehstruktur eine Reihe von optischen Fenstern (13, 14) enthält, die kreisförmig verteilt und so angeordnet sind, daß jedes Fenster in einen Lichtweg zwischen einer Lichtquelle (159 und wenigsten einen fotoelektrischen Proportionaldetektor (16) eintreten kann, wobei die Fenster einer jeden Reihe so angeordnet sind, daß in der neutralen relativen Position zwei jeweils einer Reihe angehörige entsprechende Fenster im Lichtweg teilweise überlappen, dadurch gekennzeichnet, daß die Sendeachse der Lichtquelle (15) und die Empfangsachse des fotoelektrischen Detektors in bezug auf die Achse des primären Elementes (5) und des sekundären Elements (4) geneigt sind, um durch die verschiedenen Durchgangsabschnitte der optischen Fenster (13, 14) hindurch unterschiedliche Lichtwege zu bilden, was in den Halbkammern (9, 10) zu Vielfachreflexionen führt.

2. Vorrichtung gemäß Anspruch 1, in der die Scheiben (11, 12) undurchsichtig sind und die Fenster (13, 14) durch Ausschnitte in diesen Scheiben gebildet werden, dadurch gekennzeichnet, daß die der Kammer (7) gegenüberliegenden axialen Wände Halbkammern (9, 10) bilden, die durch die Scheiben (11, 12) getrennt sind und jeweils eine Toroidform mit im wesentlichen parabolischem Querschnitt (9$_a$, 10$_a$) besitzen, wobei jede Scheibe einen Ansatz (11$_a$, 12$_a$) mit ebenfalls im wesentlichen parabolischem Querschnitt besitzt und eine reflektierende äußere axiale Fläche aufweist, wobei die Lichtquelle (15) und der Detektor jeweils im wesentlichen in den Brennpunkten dieser Halbkammern angeordnet sind.

3. Vorrichtung gemäß Anspruch 1, dadurch gekennzeichnet, daß die erste und die zweite Drehstruktur undurchsichtig und ringförmig (111, 112) sind, wobei die Fensterbereiche (114, 115) konzentrisch sind, und daß die Lichtquelle (15) und der Detektor (16) in radialer Richtung auf beiden Seiten der konzentrischen Bereiche (114, 115) angeordnet sind.

4. Vorrichtung gemäß Anspruch 1, dadurch gekennzeichnet, daß jede Scheibe (11', 12') aus einem lichtdurchlässigen Material hergestellt ist und eine äußere axiale Fläche und eine innere axiale Fläche umfaßt, die mit einer Schicht eines lichtundurchlässigen, nach innen reflektierenden Überzugs überzogen sind, wobei die inneren axialen Flächen der zwei Scheiben aneinander angrenzen, wobei die Fenster (13, 14) im Überzug der inneren Flächen ausgebildet sind und wobei die äußeren Flächen jeweils einen nicht überzogenen ringförmigen Bereich (17, 18) umfassen, der an den jeweiligen Bereich der Kammer (7) angrenzt.

5. Vorrichtung gemäß Anspruch 4, dadurch gekennzeichnet, daß der nicht überzogene ringförmige Bereich (18) der äußeren Fläche der zweiten Scheibe (12') in einem Austrittsbereich des in der zweiten Scheibe reflektierten Lichtweges ausgespart ist.

6. Vorrichtung gemäß Anspruch 5, dadurch gekennzeichnet, daß die zweite Scheibe (12') in ihrer äußeren axialen Fläche einen zweiten nicht überzogenen ringförmigen Bereich (180) enthält, der mit dem die entsprechenden Fenster (13, 14) der Scheibe durchquerenden Lichtweg ausgerichtet ist, wobei in der Nähe dieses zweiten ringförmigen Bereichs (180) ein zweiter fotoelektrischer Detektor (1609 angeordnet ist.

7. Vorrichtung gemäß einem der Ansprüche 5 oder 6, dadurch gekennzeichnet, daß wenigstens der nicht überzogene ringförmige Bereich der ersten Scheibe (11') auf einem Kranz der Scheibe ausgebildet ist, der in bezug auf die Scheibenebene geneigt ist.

8. Vorrichtung gemäß Anspruch 4, dadurch gekennzeichnet, daß die in axialer Richtung einander gegenüberliegenden Bereiche der Kammer (7) mit den entsprechenden Fenstern (13, 14) der Scheiben in einer neutralen relativen Position der letzteren ausgerichtet sind.

9. Vorrichtung gemäß einem der vorangehenden Ansprüche, dadurch gekennzeichnet, daß das elastische Torsionselement ein Torsionsstab (6') ist.

10. Vorrichtung gemäß einem der Ansprüche 1 bis 8, dadurch gekennzeichnet, daß das elastische Torsionselement von wenigstens einer C-förmigen Feder (6) gebildet wird.

FIG.1

FIG.2

FIG.3

FIG.4

FIG.5

FIG.9

EP 0 194 930 B1

FIG.6

FIG.7

FIG. 8